# EUROPÄISCHE PATENTANMELDUNG

(11) **EP 1 083 197 A2**
(43) Veröffentlichungstag der Anmeldung: **14.03.2001**
(21) Anmeldenummer: 00117399.6
(22) Anmeldetag: 25.08.2000
(51) Int. Cl.: C08K 5/00, C08L 9/02

(54) **Kautschukmischungen für Walzenbeläge**

(30) Priorität: 07.09.1999 DE 19942743
(71) Anmelder: Bayer Aktiengesellschaft, 51368 Leverkusen (DE)
(72) Erfinder: Fuchs, Erich, 51373 Leverkusen (DE)

(57) **Zusammenfassung**

Die Erfindung betrifft eine Kautschukmischung enthaltend einen Nitrilkautschuk, ein Metallsalz eines Acrylates, ein flüssiges Acrylat sowie gegebenenfalls weitere Additive, ein Verfahren zu deren Herstellung und die Verwendung für Formkörper aller Art, insbesondere Walzenbeläge.

## Beschreibung

Die Erfindung betrifft eine Kautschukmischung enthaltend einen Nitrilkautschuk, ein Metallsalz eines Acrylates, ein flüssiges Acrylat sowie gegebenenfalls weitere Additive, ein Verfahren zu deren Herstellung und die Verwendung für Formkörper aller Art, insbesondere Walzenbeläge.

Walzen mit einem Kautschukbelag werden in vielen Bereichen eingesetzt, u.a. der Druck- und Textilindustrie, in Maschinen, wie z.B. Fax-Geräten und in der Stahl- und Papierindustrie.

Besonders in der Stahl- und Papierindustrie sind die Walzenbeläge extremen Beanspruchungen ausgesetzt. Hierbei wird vor allem eine Kombination aus folgenden Eigenschaften von den Belägen gefordert:
- niedriger Druckverformungsrest
- niedriger Abrieb
- geringe Quellung in den verwendeten Medien
- gute Hitze- und chemische Beständigkeit
- exzellente Haftung Belag-Metalluntergrund
- geringer Wärmeaufbau bei Belastung.

Wir haben nun gefunden, dass eine Nitrilkautschuk-enthaltende Kautschukmischung, die weiterhin ein Metallsalz eines Acrylates und ein flüssiges Acrylat enthält besonders geeignet ist als Ausgangsstoff für Kautschukbeläge von Walzen.

Gegenstand der Anmeldung ist somit eine Kautschukmischung, enthaltend
a) einen oder mehrere Nitrilkautschuke
b) ein oder mehrere Metallsalze eines Acrylates
c) ein oder mehrere gegebenenfalls auf einen Träger aufgebrachte flüssige Acrylate, sowie
d) gegebenenfalls weitere Additive und/oder Füllstoffe.

Unter Nitrilkautschuken werden Dien-(Meth-)Acrylnitril-Copolymerisate verstanden. Isopren und insbesondere Butadien sind hierbei bevorzugte Diene. Die Copolymerisate besitzen einen Gehalt an copolymerisierten Acrylnitril- und/oder Methacrylnitrileinheiten von 5 bis 60, vorzugsweise 10 bis 50 Gew.-%.

Weiterhin werden ausdrücklich hydrierte Nitrilkautschuke unter dem Begriff subsummiert. Unter "hydriertem Nitrilkautschuk" oder "HNBR" sollen im Sinne dieser Erfindung Nitrilkautschuke, deren C=C-Doppelbindungen selektiv (d.h. ohne Hydrierung der C≡N-Dreifachbindung) teilweise oder vollkommen hydriert sind, verstanden werden. Bevorzugte hydrierte Nitrilkautschuke sind solche mit einem Hydriergrad, bezogen auf die vom Butadien stammenden C=C-Doppelbindungen, von mindestens 75, bevorzugt von mindestens 95, insbesondere von mindestens 98 %. Der Hydriergrad lässt sich NMR- und IR-spektroskopisch bestimmen.

Die Hydrierung von Nitrilkautschuk ist bekannt; US-A 3 700 637, DE-A-2 539 132, DE-A-3 046 008, DE-A-3 046 251, DE-A-3 227 650, DE-A-3 329 974, EP-A-111 412, FR-B-2 540 503. Hydrierter Nitrilkautschuk zeichnet sich durch hohe Reißfestigkeit, geringen Abrieb, niedrige bleibende Verformung nach Druck- und Zugbeanspruchung und gute Ölbeständigkeit, vor allem aber durch bemerkenswerte Stabilität gegen thermische und oxidative Einflüsse aus. Daher werden hydrierte Nitrilkautschuke im Rahmen der Erfindung bevorzugt.

Geeignete Nitrilkautschuke besitzen in der Regel Mooney-Viskositäten (DIN 53 523, ML 1+4) von 25 bis 100 ME, insbesondere 40 bis 80 ME.

Die Zugabe von Metallsalzen eines Acrylates zu Mischungen enthaltend Nitrilkautschuke ist bekannt. Geeignete Acrylate können unsubstituiert oder substituiert vorliegen. Beispiele für substituierte Acrylate sind Methacrylate.

Geeignete Acrylate sind dem Fachmann aus EP-A1-0 319 320, insbesondere S. 3, Z. 16 bis 35, aus US-A-5 208 294, insbesondere Spalte 2, Zeile 25 bis 40, aus US-A-4 983 678, insbesondere Spalte 2, Z. 45 bis 62, bekannt. Insbesondere werden hier genannt Zinkacrylat, Zinkdiacrylat und Zinkdimethacrylat.

Es kann vorteilhaft sein, das Metallsalz des Acrylates gemeinsam mit einem Scorchretarder einzusetzen. Hier kommen z.B. gehinderte Phenole, wie Methyl-substituierte Aminoalkylphenole, insbesondere 2,6-Di-tert.-butyl-4-dimethylaminomethylphenol in Betracht.

Als flüssiges Acrylat kommt jedes dem Fachmann bekannte bei Raumtemperatur in flüssiger Form vorliegende Acrylat in Frage.

Besonders bevorzugt sind Trimethylolpropantrimethacrylat (TRIM), Butandioldimethacrylat (BDMA) und Ethylenglykoldimethacrylat (EDMA).

Um eine bessere Einmischbarkeit zu erzielen kann es vorteilhaft sein, das flüssige Acrylat auf einem Träger gebunden einzusetzen. Als Träger kommen beispielsweise Silikate, gefällte Kieselsäuren, Tone, Ruß, Talkum oder Polymere in Frage. Im allgemeinen werden Gemische mit 5 bis 50 Gew.-% Träger eingesetzt.

Als weitere Additive kommen beispielsweise die dem Fachmann bekannten Vulkanisationsaktivatoren, insbesondere Metalloxide, wie Zinkoxid oder Magnesiumoxid, Alterungsschutzmittel, wie alkyl-substituierte Diphenylamine, Mercaptobenzimidazole, ungesättigte Ether, wie Vulkazon® AFD (Bayer AG, D) oder cyclische, ungesättigte Acetale, wie Vulkazon® AFS/LG (Bayer AG, D) in Frage. Weiterhin werden als Additive genannt:
- Weichmacher, insbesondere Carbonsäureester, wie Sebazinsäure und deren Derivate oder Trimellithsäure und deren Derivate
- Verarbeitungshilfsmittel, insbesondere Stearinsäure und deren Derivate, wie Zinkstearat oder Polymere, wie Poly-ethylenvinylacetat (Levapren® der Bayer AG, D) oder Poly-ethylenvinylacrylat /VAMAC® der DuPont).

Weiterhin kann es vorteilhaft sein, Füllstoffe in die erfindungsgemäße Kautschukmischung einzubringen. Diese können unverstärkend oder verstärkend sein.

Als Füllstoffe seien beispielsweise genannt:
- Ruße, wie MT-, GPF-, SRF- und vor allem FEF-Ruße,
- Metalloxide, wie Titandioxid (vor allem als Weißpigment)
- Silikate, wie Natrium-Aluminium-Silikat
- Kieselsäuren, insbesondere gefällte Kieselsäuren Um den Abrieb zu verbessern, eignen sich bevorzugt sogenannte aktive Füllstoffe gemäß DIN 66 131, veröffentlicht z.B. auf S. 535 des "Handbuch für die Gummiindustrie" der Bayer AG, 1992, Leverkusen.
- Tone, Glimmer, Talkum.

Zusätzlich kann es vorteilhaft sein zusätzliche Aktivatoren zur Haftungsverbesserung zwischen Füllstoff und Kautschuk einzusetzen, wie z.B. Silane, wie Silquest® RC-1 (Union Carbide, US). Weiterhin können Pigmente zugegeben werden.

Die Mengen der einzelnen Komponenten der Mischung richten sich nach dem Einsatzzweck der Mischung und lassen sich durch wenige Vorversuche ermitteln.

In der Regel werden die Stoffe in folgenden Mengen eingesetzt (jeweils in phr = per hundred parts of rubber):
- Metallsalz eines Acrylats 10 bis 120 phr, bevorzugt 10 bis 85 phr, insbesondere 20 bis 65 phr,
- flüssiges Acrylat 5 bis 80 phr, insbesondere 20 bis 60 phr, jeweils ohne Träger gerechnet,
- Alterungsschutzmittel 0 bis 4 phr,
- Retarder 0 bis 2 phr,
- Metalloxide, wie ZnO 0 bis 30 phr,
- Füllstoffe 0 bis 150 pbr, bevorzugt aktive Füllstoffe,
- Weichmacher 0 bis 20 phr,
- Verarbeitungshilfsmittel 0 bis 2 phr.

Ein weiterer Gegenstand der Erfindung sind vernetzbare Mischungen enthaltend die erfindungsgemäßen Kautschukmischungen, sowie ein Verfahren zur Herstellung der erfindungsgemäßen Kautschukmischungen und vernetzbarer Kautschukmischungen, dadurch gekennzeichnet, dass man die Komponenten in einem Mischaggregat mischt.

Um vernetzbare Mischungen aus den erfindungsgemäßen Mischungen herzustellen werden den erfindungsgemäßen Kautschukmischungen Vernetzer zugegeben. Als Vernetzter eignen sich Peroxidsysteme.
Bevorzugte Peroxidsysteme umfassen
Dialkylperoxide,
Ketalperoxide,
Aralkylperoxide,
Peroxidether,
Peroxidester, wie z.B.
Di-tert.-butylperoxid
Bis-(tert.-butylperoxyisopropyl)-benzol,
Dicumylperoxid,
2,5-Dimethyl-2,5-di(tert.-butylperoxy)-hexan,
2,5-Dimethyl-2,5-di(tert.-butylperoxy)-hexen-(3),
1,1-Bis-(tert.-butylperoxy)-3,3,5-trimethyl-cyclohexan,
Benzoylperoxid,
tert.-Butylcumylperoxid und
tert.-Butylperbenzoat.

Die Peroxidmengen liegen im Bereich von 1 bis 10 phr, vorzugsweise im Bereich von 4 bis 8 phr, bezogen auf Kautschuk. Die Vernetzung kann bei Temperaturen von 100 bis 200°C, vorzugsweise 130 bis 180°C, gegebenenfalls unter einem Druck von 10 bis 200 bar, erfolgen. Im Anschluss an die Vernetzung können die Vulkanisate durch Lagerung bei höherer Temperatur getempert werden.

Die Peroxide können vorteilhaft auch in polymergebundener Form eingesetzt werden. Entsprechende Systeme sind kommerziell erhältlich, wie beispielsweise Polydispersion T(VC) D-40 P der Firma Rhein Chemie Rheinau GmbH, D (= polymergebundenes Di-tert.-Butylperoxy-isopropylbenzol).

Die Vernetzung kann auch durch energiereiche Strahlung erzielt werden.

Vernetzung im Sinne der Erfindung bedeutet, dass bei 10-stündiger Extraktion im Soxhlet-Aufsatz mit Toluol als Extraktionsmittel weniger als 10, vorzugsweise weniger als 5 Gew.-%, bezogen auf Kautschuk, extrahierbar ist.

Die optimale Menge an Vernetzer ist durch Vorversuche leicht zu ermitteln.

Als Mischorgan kann jedes dem Fachmann bekannte Mischorgan für Kautschuke eingesetzt werden, insbesondere Kneter, Walzen und Schnecken.

Hierbei ist darauf zu achten, dass der Kautschuk während des Mischvorgangs nicht abgebaut wird. Es kann vorteilhaft sein, während des Mischvorgangs zu kühlen. Um Scorch zu vermeiden wird das Peroxid häufig als letzte Komponente, gegebenenfalls in einem separaten Mischvorgang, zugegeben.

Ein weiterer Gegenstand der Erfindung ist die Verwendung der erfindungsgemäßen Kautschukmischungen zur Herstellung von Formkörpern aller Art, insbesondere Belägen für Walzen, ganz besonders Walzen für die Papier-, Textil-, Druck- und Stahlindustrie.

In der Regel bestehen Walzen aus einem Metallkern mit variablem Durchmesser, wobei Metallkerne mit einem Durchmesser von 1 bis 5 m bevorzugt sind. Der Metallkern besteht in der Regel aus Stahl verschiedener Zusammensetzung auf die die vernetzbare Kautschukmischung nach im Stand der Technik üblichen Verfahren aufgezogen und anschließend vernetzt wird. Hierbei ist eine gute Haftung Belag-Metall und innerhalb des Belages entscheidend. Es kann vorteilhaft sein, die Belag-Metallhaftung durch Haftvermittler wie Dispersionen/Lösungen halogenierter Polymere gegebenenfalls mit Vernetzern/Füllstoffen/Pigmenten zu verbessern. Diese Substanzen sind kommerziell erhältlich.

Die erfindungsgemäßen Kautschukmischungen sind für die Walzenanwendung besonders gut geeignet, da sie in vernetztem Zustand eine exzellente Härte im Bereich von über 20 Shore D nach DIN 53 505 selbst bei erhöhten Servicetemperaturen mit einer guten Resistenz gegen Abrieb, Hitze, Wasser und Chemikalien verbindet. Dieses ausgeglichene Eigenschaftsspektrum ist gemäß dem Stand der Technik nicht zu erreichen. Selbstverständlich eignen sich die erfindungsgemäßen Kautschukmischungen auch zur Herstellung anderer Formkörper, wie Profile, Riemen, Ringe, Dichtungen, Dämpfungselementen usw.

Aus diesem Grund sind Formkörper, insbesondere Walzen und Riemen, herstellbar unter Verwendung einer der erfindungsgemäßen Kautschukmischung, ein weiterer Gegenstand der Erfindung.

Für den Fachmann ist es trivial, die erfindungsgemäßen Mischungen durch Zugabe weiterer Polymere, wie BR, NR, IIR, IR, EPDM, EPM, CR, SBR, AEM, ACM oder Fluorpolymeren, in ihren Eigenschaften exakt maßzuschneidern.

Folgende Beispiele dienen zur Erläuterung der Erfindung, ohne sie einschränken zu wollen.

### Beispiele

### Meßmethoden

- Rest-Doppelbindungsgehalt: IR-Spektroskopie
- Mooney Viskosität: ASTM D 1646 (in ME angegeben)
- (ML 1+4 (100°C)):
- Flüchtige Bestandteile (Gew.%): ASTM D 1416
- Aschegehalt(Gew.%): ASTM D 1416
- Acrylnitril (ACN)-Gehalt: nach folgender Vorschrift:
- (Gew.% gebunden im Polymer):

### Kurzbeschreibung des Verfahrens

Bei der Analyse wird der Kautschuk im Sauerstoffstrom an einem Katalysator bei 900°C pyrolysiert. An einem Kupferreduktionsreaktor wird der nicht verbrauchte Sauerstoff absorbiert und die gebildeten NOₓ Gase zu Stickstoff reduziert. Anschließend wird dem Analysengasstrom an einer Na₂CO₃/NaOH-Falle das enthaltende CO₂ und in einer MgClO₄-Falle das enthaltene Wasser entzogen. Die Änderung der Wärmeleitfähigkeit des Analysengases gegenüber dem Trägergasstrom ist ein Maß für den Stickstoffgehalt der Probe.

### Geräte

- Proteinanalysator Fa. Fisons, Typ NA 2000
- Mikrowaage, Fa. Sartorius, Typ Micro
- Auswerteeinheit, Fa. Digital, Typ DECpc Lpx 433 dx mit Schnittstellen zum NA 2000 und Waageninterface, sowie der Software EAGER 200

### Chemikalien und Lösungsmittel

### Methionin Fa. Hekatech

### Rezepturbestandteile

| | | |
|---|---|---|
| Therban® C 3467 | Bayer AG | HNBR mit 5,5 % RDB, 34 % ACN, 68 ME |
| Zinkoxyd aktiv® | Bayer AG | aktives Zinkoxid |
| Scorchguard® O | Rhein Chemie Rheinau GmbH | Magnesiumoxid-Paste |
| Naugard 445 | Uniroyal | Subst. Diphenylamin |
| Vulkanox® ZMB 2 | Bayer AG | Zinkmethylmerkaptobenzimidazol |
| Tronox R-UF | Kerr McGee | Titandioxid, Rutil-Typ |
| Vulkasil® S | Bayer AG | gefällte Kieselsäure |
| Vulkasil® A 1 | Bayer AG | Natrium-Aluminium-Silikat |
| Sartomer SR633 | Sartomer | Zinkdiacrylat mit Retarderzusatz |
| TRIM SR-350 | Sartomer | Trimethylolpropantrimethacrylat |
| Rhenofit® TRIM/S | RheinChemie | Trimethylolpropantri |
| | Rheinau GmbH | methacrylat 70 % / gebunden an Kieselsäure 30 % |
| BDMA ATM | Ancomer | Butandioldimethacrylat |
| Ethanox 703 | Albemarle,BE | 2,6-ditert.-butyl-4-(dimethylamino)-phenol |
| Poly-Dispersion® T (VC) D-40 P | Rhein Chemie Rheinau GmbH | Di(tert. Butyl-peroxy -isopropyl)-benzol, polymergebunden |

### Herstellung der Mischungen

Die Mischungsherstellung erfolgte in einem Laborkneter GK 1,5 E (Fa. Krupp Elastomertechnik, Hamburg), Kühlwassertemperatur 50°C, Schaufeldrehzahl 50 UPM, Stempeldruck 6 bar, Kneterfüllgrad 70-80 % bezogen auf das Kammervolumen des Kneters.

**Mischfolge:** Kautschuk vorlegen, nach 1 min. Laufzeit restliche Bestandteile zugeben, Entleeren des Kneters bei einer Batchtemperatur von >125°C. Das Peroxid wurde auf einem Walzwerk (Fa. Krupp Elastomertechnik, Walzendurchmesser 200 mm, Arbeitsbreite 350 mm) bei 40°C Kühlwassertemperatur nachgemischt.

Die Platten für die Bestimmung der mechanischen Eigenschaften wurden in einer Vulkanisierpresse (Fa. Krupp Elastomertechnik) zwischen Teflon-Folien unter den angegebenen Bedingungen vernetzt/vulkanisiert.

### Prüfung der Mischungen

| **Wert:** | | **Eigenschaften:** | **Prüfnorm:** |
|---|---|---|---|
| | Dimension | | |
| ML-1+4/100°C | ME | Viskosität nach Mooney | DIN 53523 Teil 3 |
| MS-T5/120°C, | min | Anvulkanisationsverhalten nach | DIN 53523 Teil 4 |
| bzw. 140°C | | Mooney | |
| | | (Zeit für 5 ME über Minimum) | |
| MDR-Rheometer | | Vulkanisationsverlauf | DIN 53529 Teil 3 |
| Minimum, bzw. | S'dNm | Drehmoment-Minimum-Maximum, | |
| Maximum, bzw. | | bzw. Differenz Max./ Min. | |
| MAX-Min | | | |
| T10,T50,T80,T90 | min | Zeit für 10%, 50%, 80%, 90% | |
| | | Umsatz | |
| F | MPa | Zugfestigkeit | DIN 53504 |
| D | % | Bruchdehnung | DIN 53504 |
| S xxx | MPa | Spannungswert bei xxx% | DIN 53504 |
| | | Dehnung | |
| H | Shore A/D | Härte | DIN 53505 |
| E | % | Rückprall-Elastizität | DIN 53512 |
| Abrieb | cmm | Abrieb | DIN 53516 |
| DVR | % | Druckverformungsrest | DIN 53517 Probekörper II |

| HL-Alterung | | Alterung in Heißluft | |
|---|---|---|---|
| delta F, delta D, | % | Änderung von | DIN 53508 |
| delta H | bzw.Shore | Zugfestigkeit, Bruchdehnung, | |
| | A/D | Härte | |

| Destilliertes Wasser | | Lagerung in dest. Wasser | |
|---|---|---|---|
| delta F, delta D, | %, bzw. | Änderung von Zugfestigkeit, | DIN 53521 |
| delta H, delta G | Shore D | Bruchdehnung, Härte, Gewicht | |

### Beispiel 1:

| | Teile |
|---|---|
| Therban C 3467 | 100 |
| Sartomer SR 633 | 60 |
| Rhenofit TRIM / S | 57 |
| Naugard 445 | 2 |
| Poly-Dispersion T ( VC ) D - 40 P | 6 |
| Ethanox 703 | 1 |

### Mischungseigenschaften

| | | |
|---|---|---|
| ML - 1 + 4 / 100°C | ( ME ) | 24 |

| | | 120 / 140°C |
|---|---|---|
| MS - T5 / 120°C | ( MIN ) | > 45 / > 45 |

### MDR - Rheometer 170°C /

### Laufzeit 45 MIN

| | | |
|---|---|---|
| MINIMUM | ( S'dNm ) | 0,3 |
| MAXIMUM | | 160,4 |
| MAX - MIN | | 160,1 |
| T 10 | ( min ) | 3,5 |
| T 50 | | 6,8 |
| T 80 | | 11,6 |
| T 90 | | 15,2 |

| **Vulkanisation 170°C ( MIN )** | | **17** |
|---|---|---|
| F | ( MPa ) | 20,3 |
| D | ( % ) | 110 |
| S 20 | ( MPa ) | 12,8 |
| S 50 | ( MPa ) | 15,9 |
| S 100 | ( MPa ) | 20,5 |
| H 23°C | ( Sh . A ) | 97 |
| H 23°C | ( Sh . D ) | 55 |

| **Vulkanisation 170°C (MIN)** | | **23** |
|---|---|---|
| Abrieb DIN 53516 | ( cmm ) | 63 |

### Beispiel 2:

| | |
|---|---|
| Therban C 3467 | 100 |
| Zinkoxyd aktiv | 2 |
| Scorchguard O | 2 |
| Vulkasil S | 20 |
| Vinylsilan ( 1 ) | 3 |
| Naugard 445 | 2 |
| Vulkanox ZMB - 2 | 0,5 |
| Tronox R-UF | 3 |
| Rhenofit TRIM / S | 57 |
| Sartomer SR 633 ( 3 ) | 60 |
| Ethanox 703 | 1 |
| Poly-Dispersion T ( VC ) D - 40 P | 6 |

### Mischungseigenschaften

| | | |
|---|---|---|
| ML - 1 + 4 / 100°C | ( ME ) | 37 |
| MS - T5 / 135°C | ( min ) | 43,2 |

### MDR - Rheometer 152°C / Laufzeit 180 Min.

| | | |
|---|---|---|
| MINIMUM | ( S'dNm ) | 0,9 |
| MAXIMUM | | 195,7 |
| MAX - MIN | | 194,9 |
| T 10 | ( min ) | 8,7 |
| T 50 | | 11,4 |
| T 80 | | 14,4 |
| T 90 | | 16,2 |

### Vulkanisation 90 min 152°C

| | | |
|---|---|---|
| F | ( MPa ) | 20,8 |
| D | ( % ) | 46 |
| S 20 | ( MPa ) | 17,3 |
| S 50 | ( MPa ) | 21,3 |
| S 100 | ( MPa ) | --- |
| H 23°C | ( Sh . A ) | 99 |
| H 23°C | ( Sh . D ) | 69 |

### HL - Alterung 21 d 100°C

| | | |
|---|---|---|
| Δ F | ( % ) | + 22 |
| Δ D | ( % ) | - 20 |
| Δ H | ( Sh . D ) | + 3 |

### Destilliertes Wasser 90°C

| | | | |
|---|---|---|---|
| Δ F | ( % ) | 7 d | + 1 |
| | | 14 d | + 1 |
| Δ D | ( % ) | 7 d | + 22 |
| | | 14 d | + 17 |
| Δ H | ( Sh . A ) | 7 d | - 1 |
| | | 14 d | - 1 |
| Δ H | ( Sh . D ) | 7 d | - 7 |
| | | 14 d | - 9 |
| Δ G | ( % ) | 7 d | + 2,5 |
| | | 14 d | + 1,7 |

### Vulkanisation 180 Min. 152°C

| | | |
|---|---|---|
| Abrieb DIN 53516 | ( cmm ) | 129 |

## Patentansprüche

1. Kautschukmischung, enthaltend
a) einen oder mehrere Nitrilkautschuke
b) ein oder mehrere Metallsalze eines Acrylates
c) ein oder mehrere gegebenenfalls auf einen Träger aufgebrachte flüssige Acrylate, sowie
d) gegebenenfalls weitere Additive und/oder Füllstoffe

2. Kautschukmischung nach Anspruch 1, dadurch gekennzeichnet, dass der/die Nitrilkautschuke ausgewählt sind aus der Gruppe NBR, teilhydrierter NBR und vollhydrierter NBR oder Gemische aus zwei oder mehr der Gruppenmitglieder.

3. Kautschukmischung nach Anspruch 1 und/oder 2, dadurch gekennzeichnet, dass das Metallsalz des Acrylates ein Zn-diacrylat oder ein Zn-dimethacrylat oder ein Gemisch hieraus ist.

4. Kautschukmischung nach einem oder mehreren der Ansprüche 1 bis 3, dadurch gekennzeichnet, dass das flüssige Acrylat Butandioldimethacrylat oder Trimethylolpropantrimethacrylat oder ein Gemisch hieraus ist.

5. Kautschukmischung nach einem oder mehreren der Ansprüche 1 bis 4, dadurch gekennzeichnet, dass die Mischung weiterhin einen silikatischen Füllstoff, Ruß, Zinkoxid, Magnesiumoxid oder ein Gemisch aus zwei oder mehr dieser Komponenten enthält.

6. Kautschukmischung nach einem oder mehreren der Ansprüche 1 bis 5, dadurch gekennzeichnet, dass die Mischung Vulkanisationsverzögerer und/oder Vulkanisationsbeschleuniger enthält.

7. Vernetzbare Kautschukmischung enthaltend eine Kautschukmischung gemäß einem oder mehreren der Ansprüche 1 bis 6.

8. Verfahren zur Herstellung einer Mischung gemäß einem oder mehreren der Ansprüche 1 bis 7, dadurch gekennzeichnet, dass man die Komponenten in einem Mischaggregat mischt.

9. Verfahren zur Vernetzung einer Mischung gemäß einem oder mehreren der Ansprüche 1 bis 7, dadurch gekennzeichnet, dass man als Vernetzer ein Peroxid einsetzt.

10. Vernetzte Mischung erhältlich in einem Verfahren gemäß Anspruch 9.

11. Verwendung einer Kautschukmischung gemäß einem oder mehreren der Ansprüche 1 bis 7 oder 10 zur Herstellung von Formkörpern aller Art.

12. Verwendung nach Anspruch 11 zur Herstellung von Walzenbelägen.

13. Formkörper, herstellbar unter Verwendung einer Kautschukmischung gemäß einem oder mehreren der Ansprüche 1 bis 7 oder 10.
